# EUROPÄISCHE PATENTSCHRIFT

(11) **EP 2 468 574 B1**
(45) Veröffentlichungstag und Bekanntmachung des Hinweises auf die Patenterteilung: **13.08.2014**
(21) Anmeldenummer: 11009017.2
(22) Anmeldetag: 14.11.2011
(51) Int. Cl.: B60R 5/04, B60R 7/02

(54) **Fahrzeug, insbesondere Cabriofahrzeug, mit einem Gepäckraum**
Vehicle, particularly cabriolet vehicle, with a luggage space
Véhicule, notamment voiture décapotable, doté d'un compartiment à bagages

(30) Priorität: 23.12.2010 DE 102010056134
(43) Veröffentlichungstag der Anmeldung: 27.06.2012
(73) Patentinhaber: Volkswagen Aktiengesellschaft, 38440 Wolfsburg (DE)
(72) Erfinder: Stephan, Peter, 38440 Wolfsburg (DE); Reichelt, Ralf, 38531 Rötgesbüttel (DE); Monroy, Rodriguez, Luis Francisco, 72200 Puebla, Puebla (MX)

(56) Entgegenhaltungen:
- EP-A1- 2 246 211
- WO-A1-2007/104563
- WO-A1-2008/046461
- DE-A1- 10 113 622
- DE-A1- 10 332 983
- DE-A1-102005 012 008
- DE-A1-102005 042 687
- DE-A1-102005 051 732
- US-A1- 2003 205 912
- US-A1- 2009 045 645
- US-B1- 6 546 598

## Beschreibung

Die Erfindung betrifft ein Fahrzeug, insbesondere ein Cabriofahrzeug, nach dem Oberbegriff des Anspruchs 1.

Cabriofahrzeuge mit einem Gepäckraum, insbesondere einem heckseitigen Gepäckraum sind allgemein bekannt. Ein solcher Gepäckraum ist üblicherweise nach oben durch eine karosserieseitig ortsfeste Oberwand begrenzt und mit einem öffenbaren Gepäckraumdeckel abgedeckt.

Aus der US 2003/205912 A1 oder EP 2 246 211 A1 ist ein gattungsgemäßes Fahrzeug bekannt, das mit einem abnehmbaren Windschott ausgerüstet ist, welches meist zwei mit einem Netz bespannte Rahmen umfasst, die schwenkbar aneinander festgelegt sind und wovon der eine als Abdeckung einer Fondsitzreihe und der andere in hochgestellter Wirkstellung als Windschutz für auf den vorderen Sitzen befindlicher Personen dient. Ein solches Windschott ist in seiner Funktionsposition am Fahrzeug lösbar verriegelt. Bei Nichtgebrauch des Windschotts wird dieses aus der Verriegelung genommen und innerhalb oder außerhalb des Fahrzeugs verstaut. Zur Verringerung des Staumaßes sind um die Längsmitte faltbare Windschotts bekannt (DE 100 38 714 A1; DE 10 2008 003 623 A1). Weiter ist es bekannt, ein solches faltbares Windschott in einer Tragetasche aufzubewahren (DE 103 17 442 A1).

Eine solche Tragetasche mit Inhalt wird vom Benutzer üblicherweise im Gepäckraum liegend mitgeführt. Beim Beladen des Gepäckraums behindert eine solche Windschotttasche den Beladevorgang. Zudem sind Beschädigungen an der Tasche und dem Windschott insbesondere bei schwererem Ladegut möglich.

Weiter sind im Fahrzeuginnenraum festangebrachte Ablagenetze allgemein bekannt. Beispielsweise ist auch ein festinstalliertes Ablagenetz unter einer Laderaumabdeckung bekannt (DE 101 13 622 A1). Solche bekannten, fest installierten Ablagenetze unter einer Laderaumabdeckung sind hinsichtlich ihrer Belademöglichkeit und ihrer Tragfähigkeit zur Aufnahme von leichten Kleinteilen ausgelegt.

Aus der WO 2007/104563 A1, der US 2009/045645 A1, der WO 2008/046461 A1 und der DE 103 32 983 A1 sowie aus der DE 10 2005 051 732 A1 und der DE 101 13 622 A1 ist allgemein ein Staufach im Gepäckraum eines Fahrzeuges bekannt, das in der Fahrzeuglängsrichtung teleskopartig zwischen einer Nichtgebrauchsstellung und einer Gebrauchsstellung verschiebbar ist. Aus der DE 101 13 622 A1 ist eine Gepäckraumabdeckung mit einem Tragnetz bekannt. Aus der US 6 546 598 B1 und aus der DE 10 2005 012 008 A1 sind schwenkbar angelenkte Staufächer bekannt.

Aufgabe der Erfindung ist es einen Gepäckraum für eine sichere Halterung und Aufnahme eines Windschotts nutzbar zu machen, ohne eine weitere unbehinderte Nutzung des Gepäckraums wesentlich einzuschränken.

Diese Aufgabe wird dadurch gelöst, dass unter einer karosserieseitig ortsfesten Oberwand eines Gepäckraums eine von Hand betätigbare Halterung als Staufach zur Halterung und/oder Aufnahme eines Windschotts, angebracht ist.

Bei einem heckseitigen Gepäckraum kann eine solche Oberwand vorzugsweise durch die Unterseite einer Hutablage und/oder die Unterseite einer Verdeckwanne, in die ein Cabrioverdeck in die Offenstellung einschwenkbar ist, gebildet sein.

In einer einfachen Ausführungsform wird ein gefaltetes Windschott unmittelbar unter der Oberwand mittels handbetätigbarer Halterungen befestigt, insbesondere geclipst, geschnallt oder verriegelt. Das Windschott ist damit abgehoben vom Ladeboden sicher und raumsparend verstaut und der Gepäckraum kann ansonsten weitgehend ungehindert benutzt werden.

Die Größe eines solchen Stauraums oder Staufachs ist damit etwa rechteckig und flach sowie in der Größe einem gefalteten Windschott angepasst. Zum Schutz des verstauten Windschotts und für eine Verbesserung der Optik werden weiter bevorzugte Ausführungsformen mit einem zumindest teilweise abgedeckten Staufach vorgeschlagen:

Dabei kann das Staufach in einer relativ einfachen Ausführungsform als insbesondere aufklappbares und verriegelbares Ablagenetz ausgeführt sein. Durch die Aufklappmöglichkeit kann ein gefaltetes Windschott bequem verstaut werden.

In einer weiteren bevorzugten Ausführungsform wird das Staufach als an sich bekannte flache Tasche, insbesondere als Windschotttasche ausgebildet, die jedoch erfindungsgemäß für eine Halterung unter der Oberwand weitergebildet wird. Zur Verstauung eines gefalteten Windschotts soll eine solche Tasche an einer Schmalseite öffenbar und wiederverschließbar sein.

Anstelle einer Tasche, insbesondere aus Textilmaterial oder Folienmaterial, kann ein solches entsprechend flaches Staufach auch als verriegelbare Kassette oder als flach, insbesondere klappbare Stauschale ausgeführt sein.

Verschlusselemente für solche netzartige oder kassettenförmige Staufächer können vorzugsweise durch Zugseile, Zugbänder, Reißverschlüsse oder Dreh- oder Schieberiegelelemente gebildet sein.

Ein Staufach der vorstehenden Art kann direkt an der Oberwand und/oder an Begrenzungen in der Umgebung der Oberwand befestigt sein, wobei es jedoch wesentlich ist, dass das Ladegut insbesondere ein gefaltetes Windschott, flach und unmittelbar unter der Oberwand gehalten und verstaut ist.

Konkret wird für eine solche Halterung vorgeschlagen an einer Verstärkungsplatte in einem taschenförmigen Staufach oder an einer Kassettenwand eines kassettenförmigen Staufachs oder an einer Schalenwand eines schalenförmigen Staufachs wenigstens an beiden Ecken des in Fahrtrichtung weisenden Randes Halteelemente anzuordnen, die in zugeordnete karosserieseitige haken- oder schlitzförmige Aufnahmen lösbar eingreifen. Am gegenüberliegenden Rand ist wenigstens eine handbetätigbare Riegeleinrichtung vorzusehen, welche jeweils mit einem zugeordneten karosserieseitigen Gegenelement zusammenwirkt.

Ein so ausgebildetes Staufach wird dann lediglich mit seinen Halteelementen in die karosserieseitigen Aufnahmeelemente eingesetzt, an die Oberwand hin verschwenkt und in dieser Position mit der wenigstens einen Riegeleinrichtung verriegelt.

Als Halteelemente am jeweiligen Staufach können einfache Haltebügel verwendet werden. Alternativ können die Halteelemente auch als versenkbare und in Querrichtung ausziehbare Bolzen ausgeführt sein.

Ein solches Staufach kann im Fahrzeug, wenn es kein Windschott enthält, weil dieses beispielsweise in seiner Funktionsstellung befestigt ist, als Stauraum auch für anderes Ladegut benutzt werden.

Ein solches taschenförmiges oder kassettenförmiges Staufach kann mit üblichen Handgriffen ausgerüstet werden. Wenn es ohne Windschott aus dem Fahrzeug genommen wird, kann es für anderweitige Zwecke als Tasche oder Koffer genutzt werden. Insbesondere bei der Ausführungsform mit den in Querrichtung einschiebbaren Bolzen, ist dann nicht erkennbar, dass es sich hier um eine für eine Fahrzeugbefestigung ausgerüstete Windschotttasche handelt. In einer Weiterbildung dieser Ausführung mit ausziehbaren Bolzen können diese auch als Achsen für Laufrollen verwendet werden oder unmittelbar als Laufrollen ausgebildet sein, so dass dann ein solches Staufach als Rollentasche oder Rollenkoffer gegebenenfalls in Verbindung mit einem ausziehbaren Teleskopgriff nutzbar ist. Anhand einer Zeichnung werden Ausführungsbeispiele der Erfindung erläutert.

Es zeigen:
- Fig. 1: eine Heckansicht eines Cabriofahrzeugs,
- Fig. 2: eine Ansicht von unten auf eine Oberwand eines Gepäckraums mit einer Verstärkungsplatte einer Windschotttasche,
- Fig. 3: eine erste Ausführungsform einer Windschotttasche mit unterschiedlichen Detaildarstellungen,
- Fig. 4: eine zweite Ausführungsform einer Windschotttasche mit unterschiedlichen Ansichten,
- Fig. 5: ein an einer Oberwand gehaltenes Windschott in zwei Ansichten,
- Fig. 6: eine Teilansicht auf ein Fahrzeugheck mit einer dritten Ausführungsform einer Windschotttasche,
- Fig. 7: eine vierte Ausführungsform einer Windschotttasche,
- Fig. 8: eine fünfte Ausführungsform einer Windschotttasche in unterschiedlichen Varianten und Öffnungsstellungen,
- Fig. 9: eine sechste ausführungsform eines Windschottstaufachs als Ablagenetz, und
- Fig. 10: eine siebte Ausführungsform eines Windschottstaufachs als klappbare, oben offene Stauschale.

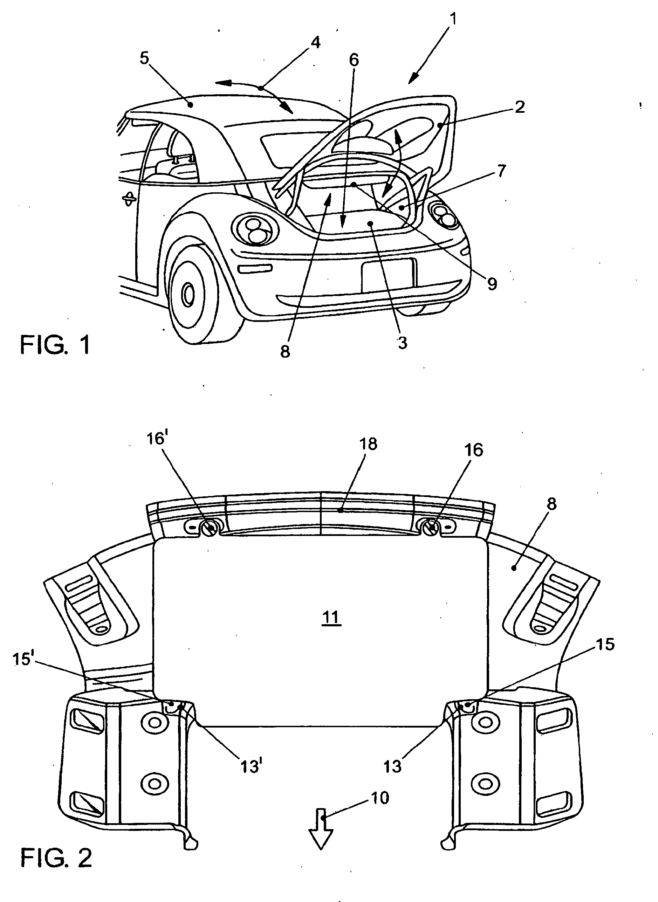

In Fig. 1 ist eine Heckansicht eines Teils eines Cabriofahrzeugs 1 gezeigt mit einem geöffneten Gepäckraumdeckel 2, der den Blick ins Innere eines Gepäckraums 3 freigibt. Das Cabriofahrzeug 1 hat ein nach hinten in eine Offenstellung schwenkbares (Pfeil 4) Cabrioverdeck 5, welches in eine (nicht sichbare) Verdeckwanne einschwenkbar ist. Der Gepäckraum 3 ist karosserieseitig ortsfest begrenzt durch einen unteren Ladeboden 6, durch Seitenwände 7 und eine Oberwand 8. Unter der Oberwand 8 ist hier lösbar eine relativ schmale etwa rechteckige Windschotttasche angebracht. Die Größe der Windschotttasche 9 ist so gewählt, dass darin ein gefaltetes Windschott untergebracht werden kann. Die Oberwand 8 kann durch die Unterseite einer Hutablage und/oder durch die Unterseite der Verdeckwanne gebildet sein.

Fig. 2 zeigt eine Ansicht von unten im Gepäckraum 3 auf die Oberwand 8. Die Fahrtrichtung ist mit dem Pfeil 10 angegeben. Von der Windschotttasche 9 ist in Fig. 2 lediglich eine Verstärkungsplatte 11 gezeigt, welche im oberen Seitenteil der Windschotttasche 9 die für das Verstauen eines Windschotts erforderliche Stabilität gewährleistet und die erforderlichen Befestigungselemente trägt.

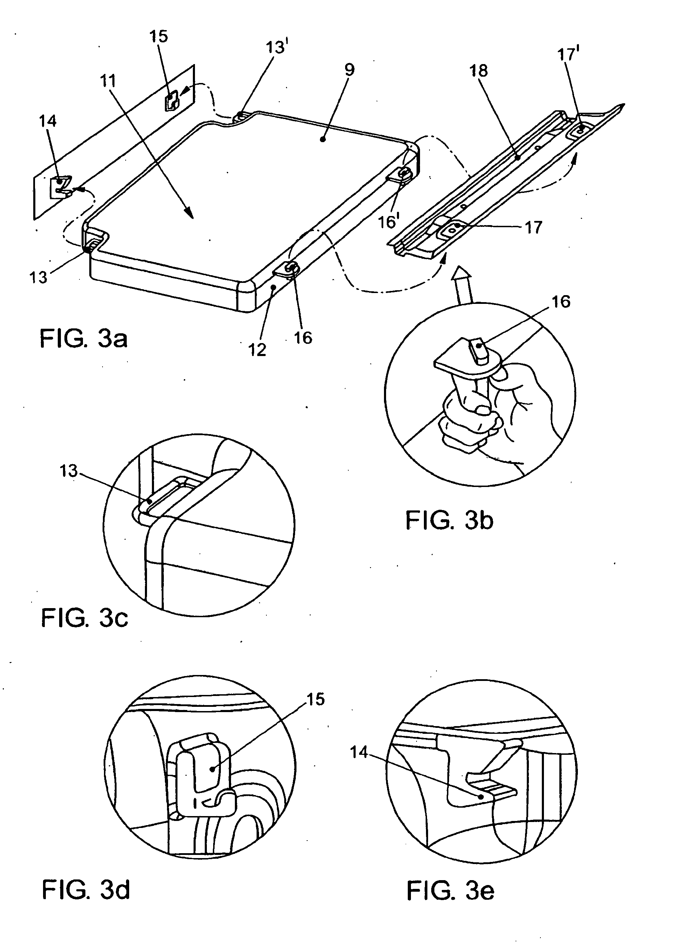

In Fig. 3 ist eine entsprechende erste Ausführungsform der Windschotttasche 9 schematisch gezeigt, in deren Oberseite die Verstärkungsplatte 11 eingearbeitet ist und die an ihrer vorderen Schmalseite 12 zum Beladen mit dem gefalteten Windschott aufklappbar und nach dem Beladevorgang wieder verriegelbar ist.

Sowohl an der Verstärkungsplatte 11 aus Fig. 2 als auch an der Windschotttasche 9 aus Fig. 3a sind an beiden Ecken des in Fahrtrichtung weisenden Randes Halteelemente als Haltebügel 13, 13'ersichtlich. Der Haltebügel 13 ist in Fig. 3c vergrößert dargestellt. Die Haltebügel 13, 13' sind je nach Ausführungsform in karosserieseitig ortsfeste schlitzförmige Aufnahmen 14 einschiebbar oder in hakenförmige Aufnahmen 15 von oben her einhängbar. Beide Möglichkeiten sind in Fig. 3a alternativ und in den Fig. 3d und 3e vergrößert dargestellt. Durch die Aufnahmen 14 oder 15 ist die Windschotttasche 9 bereits einseitig im Gepäckraum 3 unter der Oberwand 8 festgelegt.

Anschließend wird die Windschotttasche 9 nach oben geschwenkt, wobei zwei am heckseitigen Rand liegende Drehriegelelemente 16, 16' in zugeordnete Ausnehmungen 17, 17' eines Querblechs 18 der Oberwand 8 eingreifen können und durch Verdrehen eine Schlüssellochverriegelung bilden. Das Drehriegelelement 16 ist in Fig. 3b vergrößert gezeigt. Durch diese Verriegelung ist dann die Windschotttasche 9 gegebenenfalls mit innenliegendem gefalteten Windschott sicher und wieder lösbar an der Oberwand 8 des Gepäckraums 3 gehalten, so dass der Gepäckraum 3 weitgehend ungestört davon benutzbar ist.

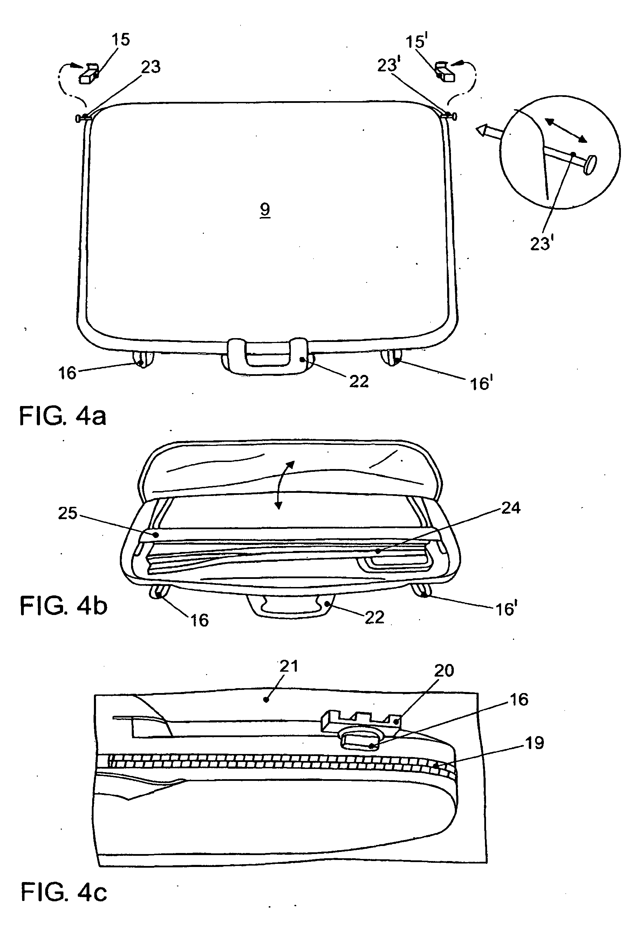

In Fig. 4 ist eine weitere Ausführungsform einer Windschotttasche 9 gezeigt, welche hier an ihrer heckseitigen Schmalseite wie in Fig. 4b gezeigt geöffnet und mittels eines Reißverschlusses 19 (siehe Fig. 4c) geschlossen werden kann. Am heckseitigen Rand sind auch hier Drehriegelelemente 16, 16'ähnlich der Ausführungsform nach Fig. 3 angebracht, welche im montierten Zustand der Windschotttasche 9 in Gegenelemente 20 an der Unterseite einer Verdeckwanne 21 eingreifen. Am heckseitigen Rand der Windschotttasche 9 ist wenigstens ein Handgriff 22 angebracht, der auch als ausziehbarer Teleskopgriff ausgeführt sein kann. Gegebenenfalls können auch Durchgrifföffnung als Handgriff angebracht sein. In Fig. 4a sind zudem heckseitige Halteelemente als versenkbare und in Querrichtung ausziehbare Bolzen 23, 23' mit einer vergrößerten Ansicht des Bolzens 23' gezeigt. Diese Bolzen 23, 23' können im ausgezogenen Zustand in karosserieseitig ortsfeste Aufnahmen beispielsweise entsprechend der hakenförmigen Aufnahmen 15, 15' aus Fig. 3 eingreifen. Anstelle der Bolzen 23, 23' oder auf diese aufsteckbar können auch (nicht dargestellte) Laufrollen verwendet werden, so dass die Windschotttasche 9 gegebenenfalls mit einem Handgriff 22 als ausziehbarem Teleskopgriff in der Art einer Rollentasche oder eines Rollenkoffers nutzbar ist. Auch in der Ausführungsform nach den Fig. 4a bis 4c kann zur Stabilisierung die Oberseite der Windschotttasche 9 eine Verstärkungsplatte 11 entsprechend Fig. 3 sein oder in die Oberseite eingearbeitet sein.

In Fig. 4b ist zudem ein bereits in der Windschotttasche 9 aufgenommenes gefaltetes Windschott 24 zu sehen. Zudem enthält die Windschotttasche 9 einen elastischen Haltebügel 25 als Querbügel für eine Stabilisierung und Fixierung des Windschotts 9 in Z-Richtung.

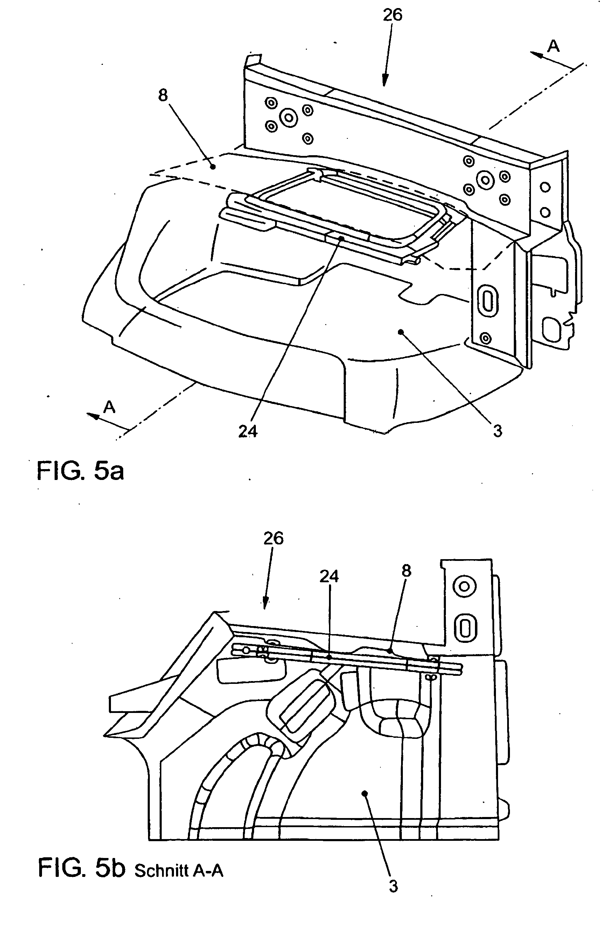

In Fig. 5 ist in zwei Ansichten der Rohbau eines Heckbereichs 26 eines Cabriofahrzeugs gezeigt. In dieser Ausführungsform ist das gefaltete Windschott 24 mit (nicht dargestellten) lösbaren Halteelementen unmittelbar unter der Oberwand 8 (in Fig. 5a strichliert dargestellt) des Gepäckraums 3 gehalten. Als lösbare Halterungen können hier an sich bekannte Laschen, Clipse, Klettverschlüsse, Verriegelungselemente, etc. verwendet werden.

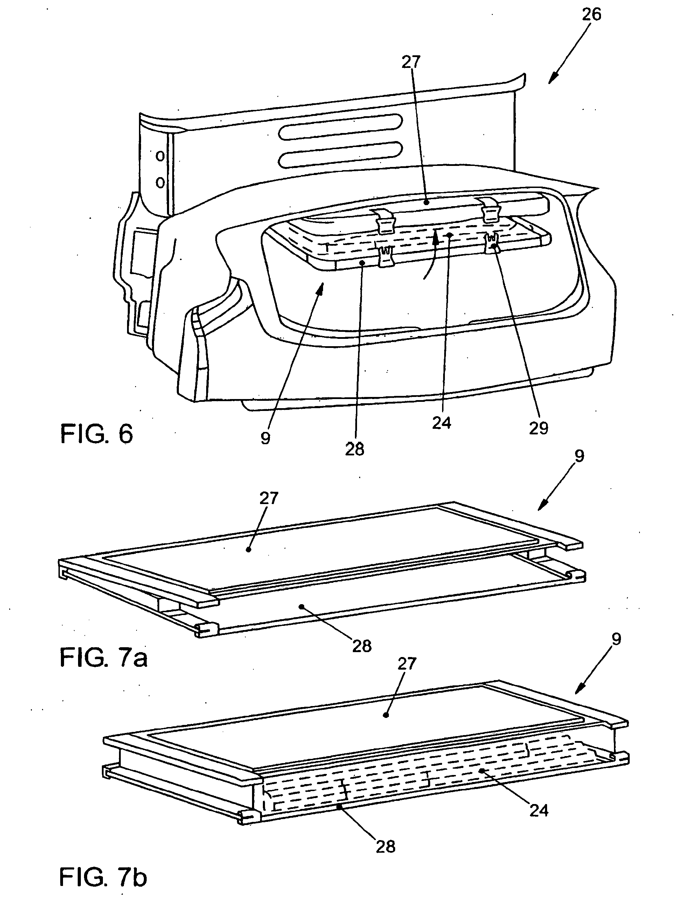

In Fig. 6 ist ebenfalls eine Ansicht auf einen Heckbereich 26 eines Cabriofahrzeugs gezeigt, wobei jedoch im Gegensatz zu Fig. 5 hier das gefaltete (strichliert gezeichnete) Windschott 24 in einer öffenbaren Windschotttasche 9 enthalten ist. Dabei kann die Taschenoberseite 27 fest unter der Oberwand 8 oder lösbar entsprechend den Ausführungsformen der Fig. 3 und 4 befestigt sein. Die Taschenunterseite 28 ist hier in jedem Fall aufklappbar und in geschlossenem Zustand mit Steckclipsen 29 verschließbar.

In Fig. 7 ist eine Ausführungsform einer Windschotttasche 9 mit ihren Taschenseiten schematisch dargestellt. Die Taschenseiten 27, 28 können als Platten ausgeführt sein, die an einer Randseite zusammenhängen und aufklappbar sind. Zudem sind die Taschenseiten 27, 28 an drei Randseiten mit einem flexiblen Materialstreifen 30 verbunden. Wie aus Fig. 7 ersichtlich, können in einen unbeladenen Zustand die Taschenseiten 27, 28 unmittelbar aufeinanderliegen, so dass dann die verstaute Windschotttasche 9 nur sehr wenig Platzbedarf hat. Soll dagegen das Windschott 24 verstaut werden, können gemäß Fig. 7b die beiden Taschenseiten 27, 28 entsprechend der Breite des Materialstreifens 30 für eine Volumenvergrößerung des Tascheninhalts auseinanderbewegt werden.

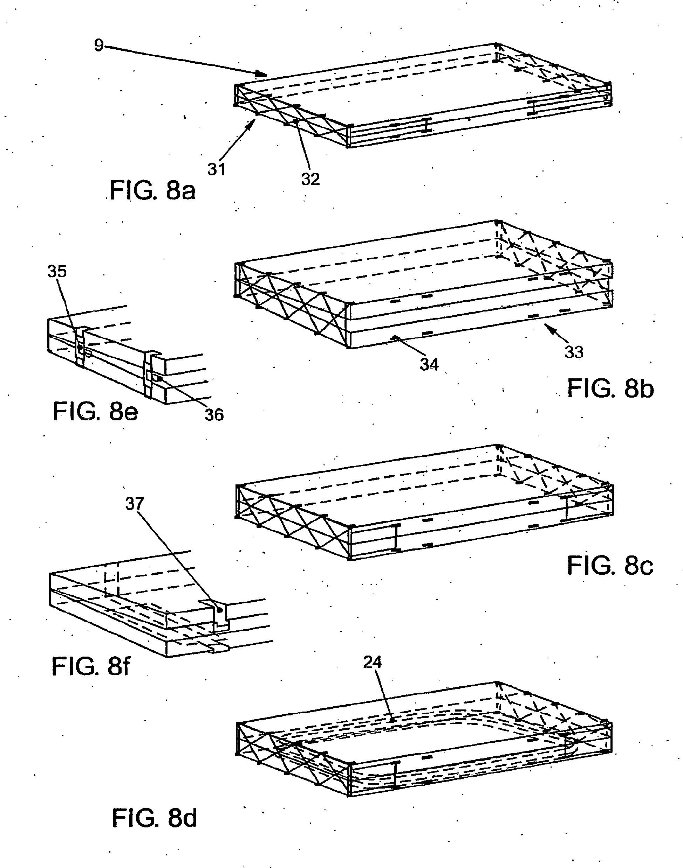

Auch in Fig. 8 sind Ausführungsbeispiele von Windschotttaschen 9 schematisch gezeigt, die ohne Ladegut, insbesondere ohne Windschott 24 entsprechend Fig. 8a sehr schmal sind und für eine Volumenvergrößerung, insbesondere zur Aufnahme eines Windschotts 24, durch entsprechende Ausführungen von Schmalseiten verbreiterbarsind. In der Ausführungsform nach Fig. 8a, b, c, d ist dazu jeweils an den seitlichen Schmalseiten eine Seilführung 31 mit über Kreuz verlaufenden Seilen 32 vorgesehen. Das Seil 32 kann je nach der gewünschten Breite der Windschotttasche 9 mehr oder weniger zusammengezogen werden und entsprechend versetzt an der zugänglichen Längsschmalseite 33 angebrachten Haken 34 eingehängt werden. Zweckmäßig wird das Seil 32 flexibel ausgeführt.

Anstelle der Seilführung 31 mit einem überkreuzten Seil 32 können alternativ gemäß Fig. 8e auch Zugseilschlaufen 35 mit Druckknöpfen 36 oder gemäß Fig. 8f Zugbänder 37 für das Verschließen einer Windschotttasche 9 verwendet werden.

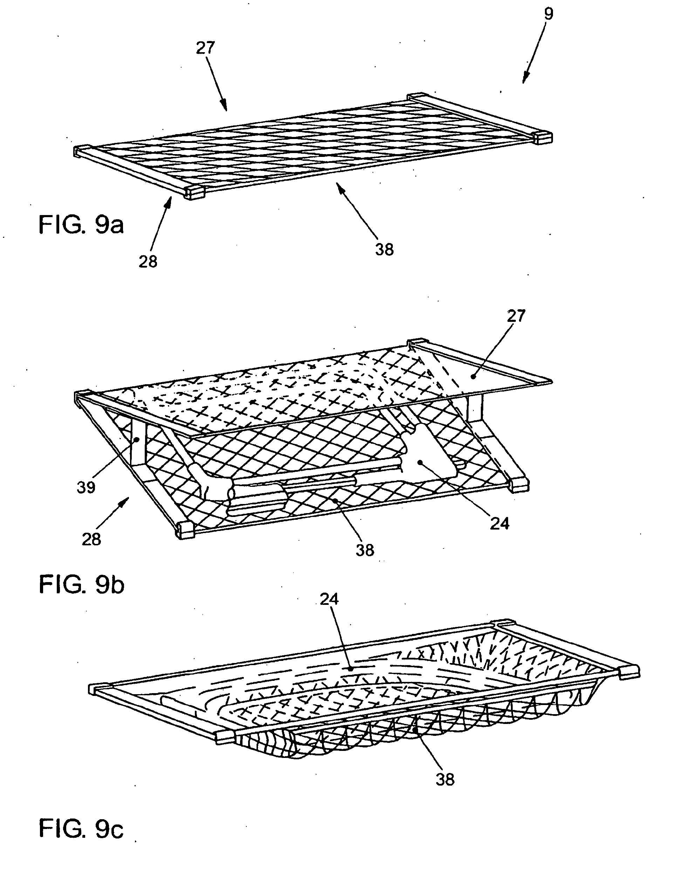

In Fig. 9 ist schematisch eine weitere Ausführungsform einer Windschotttasche 9 gezeigt, bei der die Taschenoberseite 27 plattenförmig, gegebenenfalls durchsichtig ausgeführt sein kann. Demgegenüber ist die Taschenunterseite 28 aufklappbar gehalten und als flexibles Ablagenetz 38 ausgeführt. Zur Begrenzung des Aufschwenkwinkels sind Laschen 39 verwendet.

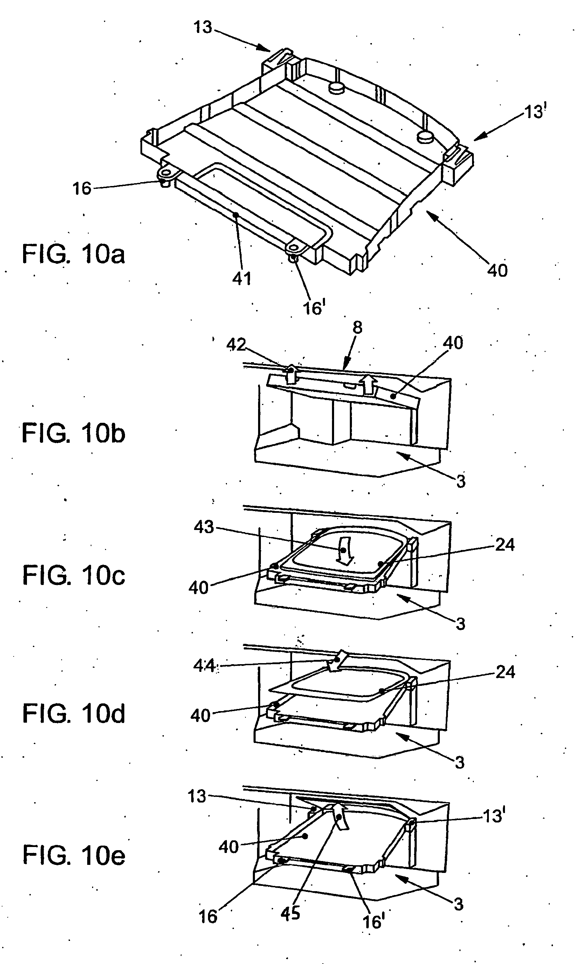

In Fig. 10 ist zudem eine weitere Ausführungsform eines Windschottstaufachs dargestellt, welches als formstabile schmale und oben offene Stauschale 40 ausgebildet ist. An den frontseitigen Ecken der Stauschale 40 sind auch hier Halteelemente ähnlich den Haltebügeln 13, 13' der Ausführungsform nach Fig. 3 ausgeführt, die an karosserieseitigen schlitzförmigen Aufnahmen 14 wie in Fig. 3e gezeigt, eingehängt und dort nach unten aufgeklappt werden können.

Am heckseitigen Schalenbereich sind gegeneinander beabstandet zwei Drehriegelelemente 16, 16' entsprechend Fig. 3a angeordnet. Zwischen den Drehriegelelementen 16, 16' erstreckt sich ein Haltesteg 41 für einen bequemen Handeingriff.

Anhand der Fig. 10b bis 10e wird die Funktion der Stauschale 40 erläutert:

In Fig. 10b ist die Stauschale 40 mit dem darin aufgenommenen Windschott 24 gegen die Oberwand 8 des Gepäckraums 3 geklappt (Pfeile 42) und mit den Drehriegelelementen 16, 16' an zugeordneten (hier nicht näher dargestellten) Gegenelementen 20 verriegelt.

Für eine Entnahme des Windschotts 24 werden die Drehriegelelemente 16, 16' gelöst, so dass die Stauschale entsprechend Fig. 10c zusammen mit dem Windschott 24 nach unten klappbar ist (Pfeil 43).

In dieser Position kann das Windschott 24 bequem aus der abgeklappten Stauschale 40 entnommen werden, wie mit Pfeil 43 in Fig. 10 angedeutet. Die nun leere Stauschale 40 kann entsprechend Fig. 10e wieder nach oben geklappt werden (Pfeil 44) und dort wieder entsprechend Fig. 10b mit den Drehriegelelementen 16, 16' verriegelt werden.

Die Stauschale 40 kann auch insgesamt an den Haltelementen 13, 13' gelöst werden. In einer Ausgestaltung (nicht näher dargestellt) kann das Windschott 24 in der Stauschale lösbar gehalten sein, so dass die Stauschale 40 und das einliegende Windschott 24 zusammen als Trageeinheit verwendet werden können, wobei der Haltesteg 41 als Traggriff benutzbar ist.

In einer weiteren Verwendung kann die Stauschale 40 mit ihrer Unterseite, gegebenenfalls einer strukturierten Unterseite, in den Kofferraum 3 am Kofferraumboden abgelegt werden und zur Lagesicherung und zur Verrutschsicherung für darin eingelegte Gegenstände dienen. Insbesondere ist entsprechend der Größe des Windschotts 24 in einer so abgelegten Stauschale 40 Platz für einen üblichen Baumarkt-Faltkorb.

**Bezugszeichenliste**

| | | | |
|---|---|---|---|
| 1 | Cabrio-Fahrzeug | 34 | Haken |
| 2 | Gepäckraumdeckel | 35 | Zugseilschlaufen |
| 3 | Gepäckraum | 36 | Druckknopf |
| 4 | Pfeil | 37 | Zugband |
| 5 | Cabrioverdeck | 38 | Ablagenetz |
| 6 | Ladeboden | 39 | Laschen |
| 7 | Seitenwände | 40 | Stauschale |
| 8 | Oberwand | 41 | Haltesteg |
| 9 | Windschotttasche | 42 | Pfeil |
| 10 | Pfeil | 43 | Pfeil |
| 11 | Verstärkungsplatte | 44 | Pfeil |
| 12 | vordere Schmalseite | | |
| 13, 13' | Haltebügel | | |
| 14 | schlitzförmige Aufnahme | | |
| 15 | hakenförmige Aufnahme | | |
| 16, 16' | Drehriegelelemente | | |
| 17, 17' | Ausnehmungen | | |
| 18 | Querblech | | |
| 19 | Reißverschluss | | |
| 20 | Gegenelement | | |
| 21 | Unterseite Verdeckwanne | | |
| 22 | Handgriff | | |
| 23, 23' | Bolzen | | |
| 24 | Windschott | | |
| 25 | Haltebügel | | |
| 26 | Heckbereich | | |
| 27 | Taschenoberseite | | |
| 28 | Taschenunterseite | | |
| 29 | Steckclipse | | |
| 30 | Materialstreifen | | |
| 31 | Seilführung | | |
| 32 | Seil | | |
| 33 | Längsschmalseite | | |

## Patentansprüche

1. Fahrzeug, insbesondere Cabriofahrzeug,
mit einem Gepäckraum (3), der nach oben durch eine karosserieseitig ortsfeste Oberwand (8) begrenzt ist und der mit einem öffenbaren Gepäckraumdeckel (2) abgedeckt ist, und mit einem Windschott (24),
**dadurch gekennzeichnet, dass** unter der Oberwand (8) eine von Hand betätigbare Halterung als Staufach (9) zur Halterung und/oder Aufnahme , des Windschotts (24) angebracht ist.

2. Fahrzeug, insbesondere Cabriofahrzeug nach Anspruch 1, **dadurch gekennzeichnet, dass** die Oberwand (8) eines heckseitigen Gepäckraums (3) durch die Unterseite einer Hutablage gebildet ist und/oder die Unterseite einer Verdeckwanne (21) ist, in die ein Cabrioverdeck (5) in die Offenstellung einschwenkbar ist.

3. Fahrzeug, insbesondere Cabriofahrzeug nach Anspruch 1 und Anspruch 2, **dadurch gekennzeichnet, dass** das Staufach (9) etwa rechteckig und flach ausgebildet ist und in seiner Größe zur Aufnahme eines in seiner Mitte gefalteten Windschotts (24) angepasst ist.

4. Fahrzeug, insbesondere Cabriofahrzeug nach einem der Ansprüche 1 bis 3, **dadurch gekennzeichnet, dass** das Staufach als, insbesondere klappbares und verriegelbares Ablagenetz (37) ausgeführt ist.

5. Fahrzeug, insbesondere Cabriofahrzeug nach einem der Ansprüche 1 bis 3, **dadurch gekennzeichnet, dass** das Staufach als Tasche (9) gegebenenfalls mit einer Oberseite als Verstärkungsplatte (11) ausgebildet ist und zumindest an einer Schmalseite (12) öffenbar und mittels Verschlusselementen (31; 34; 37; 19) in einer Geschlossenstellung verschließbar ist.

6. Fahrzeug, insbesondere Cabriofahrzeug, nach einem der Ansprüche 1 bis 3, **dadurch gekennzeichnet, dass** das Staufach (9) als flache, öffenbare und verriegelbare Kassette ausgeführt ist.

7. Fahrzeug, insbesondere Cabriofahrzeug, nach einem der Ansprüche 1 bis 3, **dadurch gekennzeichnet, dass** das Staufach als flache, insbesondere klappbare Stauschale ausgebildet ist, die mit ihrer offenen Seite unter der Oberwand angebracht ist.

8. Fahrzeug, insbesondere Cabriofahrzeug, nach einem der Ansprüche 5 oder 6, **dadurch gekennzeichnet, dass** die Verschlusselemente des Staufachs durch Zugseile (32) und/oder durch Zugbänder (37) und/oder durch einen Reißverschluss (19) gebildet sind.

9. Fahrzeug, insbesondere Cabriofahrzeug, nach einem der Ansprüche 4 bis 8, **dadurch gekennzeichnet, dass** das Staufach (9) lösbar an der Oberwand (8) und/oder an Begrenzungen der Oberwand (8) dergestalt befestigt ist, dass es flach unmittelbar unter der Oberwand (8) liegt.

10. Fahrzeug, insbesondere Cabriofahrzeug, nach Anspruch 9, **dadurch gekennzeichnet, dass** ein taschenförmiges Staufach (9) an einer Verstärkungsplatte (11) oder ein kassettenförmiges Staufach an einer Kassettenwand oder ein schalenförmiges Staufach an einer Schalenwand wenigstens an beiden Ecken des in Fahrtrichtung weisenden Randes Halteelemente (12, 23) aufweist, die in zugeordnete karosserieseitige haken- oder schlitzförmige Aufnahmen (14, 15) lösbar eingreifen, und
dass am gegenüberliegenden heckseitigen Rand des Staufachs wenigstens eine handbetätigbare Riegeleinrichtung (16) vorgesehen ist, die jeweils mit einem zugeordneten karosserieseitigen Gegenelement (17; 20) zusammenwirkt.

11. Fahrzeug, insbesondere Cabriofahrzeug nach Anspruch 10, **dadurch gekennzeichnet, dass** die Halteelemente als Haltebügel (13) und/oder als versenkbare und in Querrichtung ausziehbare Bolzen (23) ausgeführt sind, und dass die Bolzen (23) gegebenenfalls als Achsen für Laufrollen verwendbar sind, so dass das Staufach (9) als Rollentasche oder Rollenkoffer vorzugsweise mit einem ausziehbaren Teleskopgriff nutzbar ist.

## Claims

1. Vehicle, particularly cabriolet vehicle,
with a luggage space (3) which is upwardly bounded by a positionally fixed upper wall (8) on the body side and which is covered with an openable luggage space lid (2), and with a wind deflector (24),
**characterized in that** a holder which can be operated by hand is mounted below the upper wall (8) as a storage compartment (9) for holding and/or receiving the wind deflector (24).

2. Vehicle, particularly cabriolet vehicle, according to Claim 1, **characterized in that** the upper wall (8) of a rear-end luggage space (3) is formed by the lower side of a rear parcel shelf and/or is the lower side of a cabriolet-top trough (21) into which a cabriolet top (5) can be pivoted into the open position.

3. Vehicle, particularly cabriolet vehicle, according to Claim 1 and Claim 2, **characterized in that** the storage compartment (9) is of approximately rectangular and flat design and is adapted in the size thereof in order to receive a centrally folded wind deflector (24).

4. Vehicle, particularly cabriolet vehicle, according to one of Claims 1 to 3, **characterized in that** the storage compartment is designed as an, in particular, foldable and lockable luggage net (37) .

5. Vehicle, particularly cabriolet vehicle, according to one of Claims 1 to 3, **characterized in that** the storage compartment is designed as a pocket (9), optionally with an upper side in the form of a reinforcing plate (11), and can be opened at least on one narrow side (12) and can be closed in a closed position by means of closure elements (31; 34; 37; 19) .

6. Vehicle, particularly cabriolet vehicle, according to one of Claims 1 to 3, **characterized in that** the storage compartment (9) is designed as a flat, openable and lockable cassette.

7. Vehicle, particularly cabriolet vehicle, according to one of Claims 1 to 3, **characterized in that** the storage compartment is designed as a flat, in particular foldable, storage shelf which is mounted with the open side thereof below the upper wall.

8. Vehicle, particularly cabriolet vehicle, according to either of Claims 5 and 6, **characterized in that** the closure elements of the storage compartment are formed by tension cables (32) and/or by tension straps (37) and/or by a zip fastener (19).

9. Vehicle, particularly cabriolet vehicle, according to one of Claims 4 to 8, **characterized in that** the storage compartment (9) is fastened releasably to the upper wall (8) and/or to boundaries of the upper wall (8) in such a manner that said storage compartment lies flat directly below the upper wall (8).

10. Vehicle, particularly cabriolet vehicle, according to Claim 9, **characterized in that** a pocket-shaped storage compartment (9) has, on a reinforcing plate (11), or a cassette-shaped storage compartment has, on a cassette wall, or a shell-shaped storage compartment has, on a shell wall, at least at the two corners of the edge pointing in the direction of travel, holding elements (12, 23) which releasably engage in associated hook- or slot-shaped receptacles (14, 15) on the body, and **in that** at least one manually operable locking device (16) which interacts in each case with an associated counter element (17; 20) on the body is provided on the opposite rear-end edge of the storage compartment.

11. Vehicle, particularly cabriolet vehicle, according to Claim 10, **characterized in that** the holding elements are designed as holding clips (13) and/or as retractable bolts (23) which are extendable in the transverse direction, and **in that** the bolts (23) are optionally usable as axles for castors, and therefore the storage compartment (9) can be used as a roller pocket or roller case, preferably having an extendable telescopic handle.

## Revendications

1. Véhicule, en particulier véhicule cabriolet, comprenant un coffre à bagages (3) qui est limité vers le haut par une paroi supérieure (8) fixée du côté de la carrosserie et qui est recouvert par un capot de coffre à bagages (2) pouvant être ouvert et comprenant un déflecteur de vent (24), **caractérisé en ce que** sous la paroi supérieure (8) est montée une fixation pouvant être actionnée à la main, servant de compartiment de rangement (9) pour fixer et/ou recevoir le déflecteur de vent (24) .

2. Véhicule, en particulier véhicule cabriolet selon la revendication 1, **caractérisé en ce que** la paroi supérieure (8) d'un coffre à bagages (3) du côté arrière est formée par le côté inférieur d'un hayon arrière et/ou est le côté inférieur d'un compartiment de capote (21) dans lequel une capote de cabriolet (5) peut être introduite par pivotement dans la position ouverte.

3. Véhicule, en particulier véhicule cabriolet selon la revendication 1 et la revendication 2, **caractérisé en ce que** le compartiment de rangement (9) est réalisé approximativement sous forme rectangulaire plate et sa dimension est adaptée de manière à recevoir un déflecteur de vent (24) plié en son centre.

4. Véhicule, en particulier véhicule cabriolet selon l'une quelconque des revendications 1 à 3, **caractérisé en ce que** le compartiment de rangement est réalisé sous forme de filet de rangement (37) notamment rabattable et verrouillable.

5. Véhicule, en particulier véhicule cabriolet selon l'une quelconque des revendications 1 à 3, **caractérisé en ce que** le compartiment de rangement est réalisé sous forme de poche (9) éventuellement avec un côté supérieur servant de plaque de renforcement (11) et peut être ouvert au moins au niveau d'un côté étroit (12) et peut être fermé au moyen d'éléments de fermeture (31 ; 34 ; 37 ; 19) dans une position fermée.

6. Véhicule, en particulier véhicule cabriolet selon l'une quelconque des revendications 1 à 3, **caractérisé en ce que** le compartiment de rangement (9) est réalisé sous forme de cassette plate, pouvant être ouverte et verrouillée.

7. Véhicule, en particulier véhicule cabriolet selon l'une quelconque des revendications 1 à 3, **caractérisé en ce que** le compartiment de rangement est réalisé sous forme de coque de rangement plate, notamment rabattable, qui est montée avec son côté ouvert en dessous de la paroi supérieure.

8. Véhicule, en particulier véhicule cabriolet selon l'une quelconque des revendications 5 ou 6, **caractérisé en ce que** les éléments de fermeture du compartiment de rangement sont formés par des câbles de traction (32) et/ou par des bandes de traction (37) et/ou par une fermeture à glissière (19) .

9. Véhicule, en particulier véhicule cabriolet selon l'une quelconque des revendications 4 à 8, **caractérisé en ce que** le compartiment de rangement (9) est fixé de manière amovible à la paroi supérieure (8) et/ou à des limitations de la paroi supérieure (8) de telle sorte qu'il soit situé à plat directement sous la paroi supérieure (8).

10. Véhicule, en particulier véhicule cabriolet selon la revendication 9, **caractérisé en ce qu'**un compartiment de rangement (9) en forme de poche présente, au niveau d'une plaque de renforcement (11), ou, un compartiment de rangement en forme de cassette présente, au niveau d'une paroi de cassette, ou, un compartiment de rangement en forme de coque présente, au niveau d'une paroi de coque, au moins au niveau des deux coins du bord tourné dans la direction de conduite, des éléments de retenue (12, 23) qui viennent en prise de manière amovible dans des logements associés en forme de crochet ou de fente (14, 15) du côté de la carrosserie, et
**en ce qu'**au niveau du bord du côté arrière opposé du compartiment de rangement est prévu au moins un dispositif de verrouillage (16) pouvant être actionné à la main, lequel coopère à chaque fois avec un élément conjugué associé du côté de la carrosserie (17 ; 20).

11. Véhicule, en particulier véhicule cabriolet selon la revendication 10, **caractérisé en ce que** les éléments de retenue sont réalisés sous forme d'étriers de retenue (13) et/ou sous forme de boulons (23) rétractables et pouvant être sortis dans la direction transversale, et **en ce que** les boulons (23) peuvent être utilisés éventuellement en tant qu'axes pour des galets de roulement, de sorte que le compartiment de rangement (9) puisse être utilisé comme poche roulante ou coffre roulant de préférence avec une poignée télescopique pouvant être sortie.
